Europäisches Patentamt

European Patent Office

Office européen des brevets

(19)

(11) Veröffentlichungsnummer: **0 010 625**
**B1**

(12) # EUROPÄISCHE PATENTSCHRIFT

(45) Veröffentlichungstag der Patentschrift:
27.04.83

(21) Anmeldenummer: **79103703.9**

(22) Anmeldetag: **28.09.79**

(51) Int. Cl.³: **G 06 F 13/00,** G 11 C 9/06

(54) **Hierarchisches Speichersystem.**

(30) Priorität: **26.10.78 US 955031**

(43) Veröffentlichungstag der Anmeldung:
**14.05.80 Patentblatt 80/10**

(45) Bekanntmachung des Hinweises auf die Patenterteilung:
**27.04.83 Patentblatt 83/17**

(84) Benannte Vertragsstaaten:
**DE FR GB**

(56) Entgegenhaltungen:
**DE-B-2 332 603**
**FR-A-2 277 407**
**GB-A-976 499**
**US-A-3 275 991**
**US-A-3 693 165**
**US-A-3 761 883**
**US-A-3 786 427**
**US-A-3 806 888**
**US-A-3 839 706**
**US-A-3 883 854**
**US-A-3 896 419**
**US-A-3 911 401**
**US-A-3 938 097**
**US-A-3 967 247**
**US-A-4 075 686**

(73) Patentinhaber: **International Business Machines Corporation, Armonk, N.Y. 10504 (US)**

(72) Erfinder: **Capozzi, Anthony Joseph, 1416 Livingston Place, Binghamton New York 13903 (US)**

(74) Vertreter: **Rudolph, Wolfgang, Schönaicher Strasse 220, D-7030 Böblingen (DE)**

**IBM TECHNICAL DISCLOSURE BULLETIN, Jahrgang 15, Nr. 2, Juli 1972, Armonk, US, W. BEAUSOLEIL: «Hierarchal memory», Seiten 629–631**

**COMPUTER GROUP News, Jahrgang 2, Nr. 8, März 1969, Los Angeles, US, C. CONTI: «Concepts for buffer storage», Seiten 9–13**

## Hierarchisches Speichersystem

Die Erfindung betrifft ein hierarchisches Speichersystem gemäss Oberbegriff des Patentanspruchs 1.

Grosse Datenverarbeitungssysteme haben Prozessoren mit wesentlich höheren Arbeitsgeschwindigkeiten, so dass man grössere, leicht zugängliche Speichersysteme braucht. Um die höhere Arbeitsgeschwindigkeit des Systems voll nutzen zu können, muss der Speicher oder wenigstens ein Teil des Speichers mit einer Geschwindigkeit arbeiten, die der Arbeitsgeschwindigkeit der Verarbeitungseinheit einigermassen nahekommt. Es ist jedoch sehr schwierig, zuverlässig einen beliebigen Datenblock in einem grossen Speicher bei hoher Arbeitsgeschwindigkeit auf wirtschaftliche Art zu adressieren.

Die Lösung des Problems besteht im Einsatz einer zwei- oder mehrstufigen Speicherhierarchie, die einen kleinen schnellen Speicher, nachfolgend Cachespeicher genannt, und einen grossen, relativ langsameren Hauptspeicher enthält. Der Prozessor des Systems kommuniziert direkt im wesentlichen mit Systemgeschwindigkeit mit dem Cachespeicher. Wenn vom Prozessor angeforderte Daten nicht im Cachespeicher stehen, müssen sie in dem oder den Hauptspeichern gesucht und in den Cachespeicher übertragen werden, wo sie notwendigerweise einen vorhandenen Datenblock ersetzen.

Damit ein auf einem Cachespeicher basierendes System voll zur Wirkung kommt, muss ein leistungsfähiges Steuersystem Datenübertragungen zwischen dem Hauptspeicher und dem Cachespeicher und Dateneingänge vom System (Kanäle, Verarbeitungseinheit usw.) zum Cachespeicher oder den Hauptspeichern effektiv steuern, weil sonst viele Vorteile des Cachespeichers verlorengehen.

Die zahlreichen, zur Optimierung des Systems notwendigen Kompromisse sind jedoch nicht ohne weiteres ersichtlich. In der US-Patentschrift 3 896 419 wird beispielsweise ein Cachespeichersystem beschrieben, in dem eine Datenanforderung an den Cachespeicher parallel zur Datenanforderung vom Hauptspeicher verarbeitet wird. Ein erfolgreicher Datenabruf aus dem Cachespeicher bricht das Auslesen aus dem Hauptspeicher ab. Dieses Lösungsprinzip scheint sehr wirksam, insbesondere bei der Anforderung von grossen Datenmengen, die aus dem Hauptspeicher geholt werden müssen. Bei der verbesserten Programmierungstechnik, bei der Systeme so aufgebaut sind, dass sie weniger Datenübertragungen vom Hauptspeicher brauchen, kann eine solche Lösung jedoch tatsächlich die effektive Gesamtarbeitsgeschwindigkeit eines Systems heruntersetzen, weil dort zusätzliche Zeit für den Speicherzyklus und die Bereitstellung für die nächste Anforderung erforderlich ist, auch wenn bei einem erfolgreichen Auslesen aus dem Cachespeicher das Auslesen aus dem Hauptspeicher abgebrochen wird. Wenn also einem Cachetreffer (Daten stehen im Cachespeicher) direkt ein Cachefehler folgt (Daten stehen nicht im Cachespeicher), kann die Systemleistung heruntergesetzt werden, da das System warten muss, bis der Hauptspeicher in den Bereitschaftszustand zurückgekehrt ist (Ruhezustand), bevor die Datenerfassung und -übertragung beginnen kann.

Ein anderer Nachteil eines solchen Systems besteht darin, dass die verschiedenen Taktgeber für den Kanal, den Hauptspeicher, den Cachespeicher und den Prozessor synchron laufen und die gleiche Anzahl von Pulsen und dieselben Taktzyklen verwenden müssen. Dies stellt eine Einschränkung in der Konstruktion dar und kann zur Wirkungslosigkeit in einem oder mehreren Untersystemen führen.

Aus der JA-JA-5 040 042 ist das eingangs genannte hierarchische Speichersystem bekannt. Parallel zum schnellen Speicher ist ein Nebenschluss zur Informationsverarbeitungseinheit über ein Datenregister vorhanden, über den Daten transportiert werden, wenn kein Treffer erzielt wurde.

Die Verwendung eines Ring-Zählers zur wortweisen Übertragung einer Speicherseite ist üblich (vergleiche z. B. US-A-3 806 888).

Ferner ist aus der US-A-3 883 854 ein überlappend arbeitender Speicher bekannt, dessen Speichereinheiten in sich überlappenden Operationszyklen betrieben werden kann, um die Speichergeschwindigkeit zu erhöhen. Jeder Speichereinheit ist dabei ein eigener Ring-Zähler zugeordnet, der dann gestartet wird, wenn ein erster Zugriff auf die zugeordnete Speichereinheit erfolgt. Der Ring-Zähler erzeugt Treiber- und Steuerimpulse für die jeweilige Steuereinheit.

Es ist Aufgabe der Erfindung, bei einem Speichersystem der eingangs genannten Art einen derartigen Pipeline-Betrieb zwischen dem grossen Speicher, dem kleinen Speicher und der Informationsverarbeitungseinheit zu schaffen. Diese Aufgabe wird durch das Speichersystem entsprechend dem Patentanspruch 1 gelöst.

Ein Ausführungsbeispiel der Erfindung ist anhand der beigefügten Zeichnungen dargestellt und wird anschliessend näher beschrieben.

Es zeigen:

Fig. 1 in einem Blockdiagramm ein herkömmliches Prozessorsystem mit zwei Steuerebenen für einen zweistufigen Speicher,

Fig. 2 in einem Blockdiagramm eine erfindungsgemässe einstufige Steuerung für ein zweistufiges Speichersystem,

Fig. 3 in einem Blockdiagramm ein Datenverarbeitungssystem mit einem zweistufigen Speicher zur Illustration des Datenflusses im System,

Fig. 4 in einem Blockdiagramm die Adressteilung eines in einer erfindungsgemässen Speichersteuerung verwendeten Speicheradressregisters,

Fig. 5 in einem detaillierten Blockdiagramm eine erfindungsgemässe Speichersteuerung für ein Datenverarbeitungssystem,

Fig. 6 die Reihenfolge der Datenübertragung,

Fig. 7 in einem Zeitablaufdiagramm die Vorgangsfolge bei einem Cachefehler und der anschliessenden Datenübertragung vom Hauptspeicher in den Cachespeicher und

Fig. 8 in einem Diagramm den Ablauf der Vorgänge, bezogen auf das Zeitdiagramm der Fig. 7.

Die vorliegende Erfindung wird anhand eines zweistufigen Speichersystems beschrieben, der Erfindungsgedanke lässt sich jedoch ohne weiteres auf ein mehrstufiges Speichersystem anwenden.

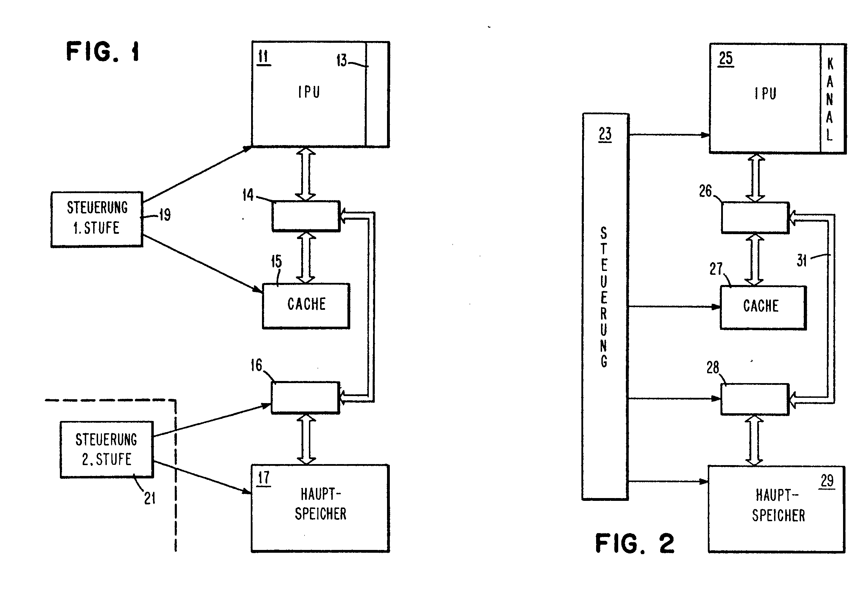

In Fig. 1 ist ein typisches Datenverarbeitungssystem bekannter Art mit einem zweistufigen Speichersystem gezeigt. Das System enthält eine Informationsverarbeitungseinheit 11, das den Kanal 13 enthält. Der zweistufige Speicher besteht aus einem sehr schnellen Cachespeicher 15, einem Fehlerkorrekturbitgenerator 16 und einem relativ langsameren Hauptspeicher 17. Eine Steuerung 19 für die erste Stufe steuert den Datenfluss vom Cachespeicher 15 über ein Eingabe-/Ausgaberegister 14 zur Informationsverarbeitungseinheit (IPU) 11. Wenn die gewünschten Daten nicht im Cachespeicher gefunden werden, wird die Steuerung auf eine Steuerung 21 der Stufe 2 übertragen, die die Daten im Hauptspeicher aufsucht und sie über den Fehlerkorrekturbitgenerator 16 und das Eingabe-/Ausgabedatenregister 14 an den Cachespeicher 15 überträgt. Bei dieser Systemkonfiguration müssen die beiden Steuerungen 19 und 21 für die erste bzw. zweite Stufe effektiv zusammenarbeiten. Die Steuerung 19 für die erste Stufe steuert dann den Datenfluss von der Sammelleitung in die entsprechende Cachespeicherstelle. Dadurch wiederum wird die Gesamtarbeitsgeschwindigkeit des Systems und sein Wirkungsgrad eingeschränkt.

Das Blockdiagramm in Fig. 2 zeigt das Konzept einer Steuerung 23 für die IPU und den Kanal 25, das Eingabe-/Ausgaberegister 26, den Cachespeicher 27 und den Fehlerkorrekturbitgenerator 28 sowie den Hauptspeicher 29. Durch Verwendung dieser einen Steuerung 23 kann der Hauptspeicher 29 direkt angesteuert werden, wenn die gewünschten Daten sich nicht im Cachespeicher 27 finden, ohne dass die ganze benötigte Datenadressinformation erst an eine andere Steuerung übertragen wird. Durch Verwendung einer Steuerung 23 können ausserdem Daten direkt von der Verarbeitungseinheit 25 in den Hauptspeicher 29 über eine Datenbahn 31 übertragen werden, die den Cachespeicher 27 umgeht.

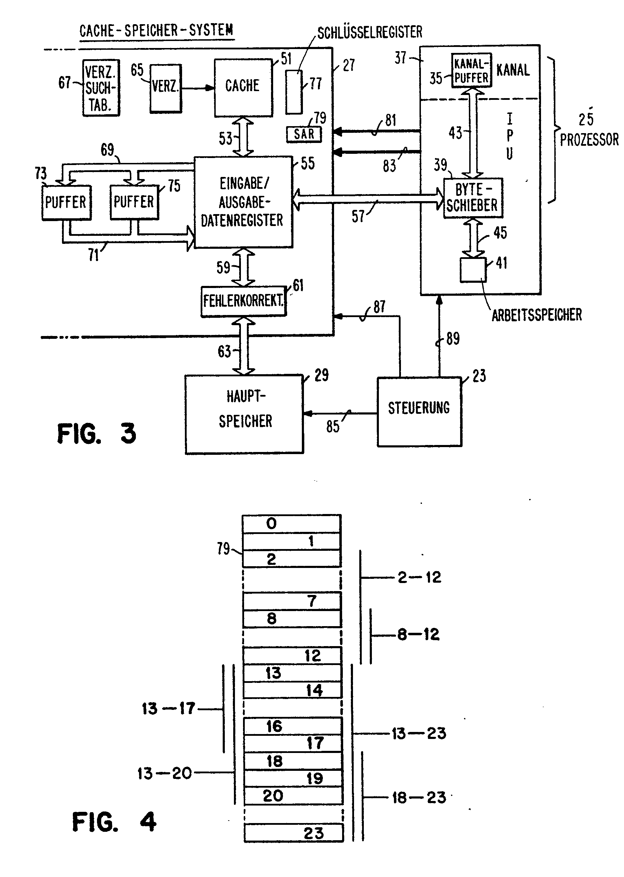

In dem Blockdiagramm der Fig. 3 zur Darstellung des Systemdatenflusses sind nur die wesentlichen Bauteile gezeigt. Die wichtigsten Teile des Prozessors 25 sind der Kanalpuffer 35 im Kanal 37, ein Byteschieber 39 und ein Arbeitsspeicher 41. Der Kanalpuffer kommuniziert mit dem Byteschieber 39 über eine Datenleitung 43 und der Byteschieber 39 wiederum mit dem Arbeitsspeicher 41 über eine Datenleitung 45. Das Cachespeichersystem 27 enthält den eigentlichen Cachespeicher 51, der über eine Datenleitung 53 mit einem Eingabe-/Ausgabedatenregister 55 verbunden ist, das über eine bidirektionale Datenleitung 57 an den Byteschieber 39 im Prozessor 25 angeschlossen ist. Der Datenfluss läuft über eine Datenleitung 59 zu einem Fehlerkorrekturbitgenerator 61, der wiederum über eine Datenleitung 63 mit dem Hauptspeicher 29 verbunden ist. An den Cachespeicher 51 ist ein Speicher mit einem Verzeichnis 65 angeschlossen und im Cachespeichersystem 27 steht eine Verzeichnissuchtabelle (DLAT) 67. Über die Datenleitungen 69 und 71 sind ein Lesepuffer 73 und ein Überlaufpuffer 75 an das Datenregister 55 angeschlossen. Das Cachespeichersystem 27 enthält ausserdem eine Schlüsseleinrichtung 77 und ein Speicheradressregister (SAR) 79. Ausserdem laufen vom Prozessor 25 zum Cachespeichersystem 27 eine einseitige Adresssammelleitung 81 und eine einseitige Befehlsammelleitung 83. Die Steuerungen 23 für diese Systeme sind über die Datenleitungen 85, 87 und 89 angeschlossen.

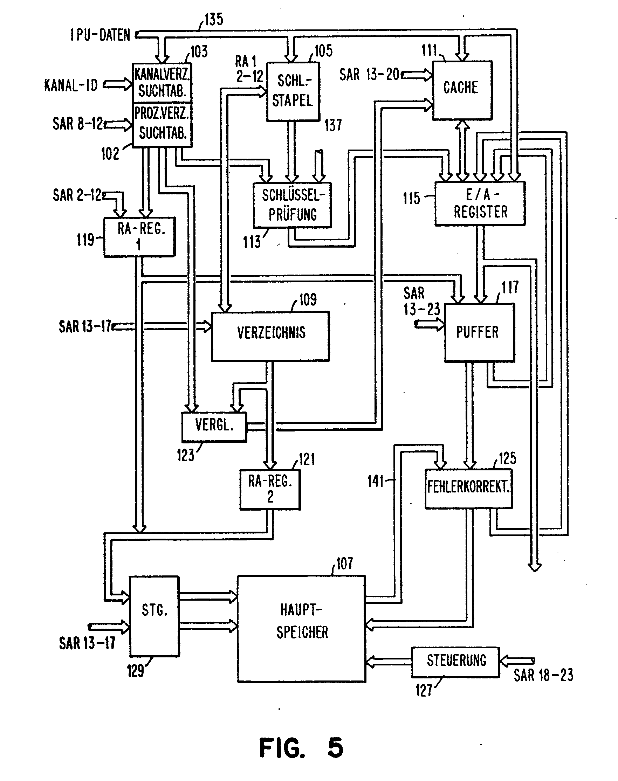

Fig. 4 zeigt ein 24 Bit grosses Speicheradressregister (SAR) 79, das die Hauptadresseinrichtung der Speichersteuerung 27 der Fig. 3 ist. Die in das SAR gesetzte Adresse wird von der IPU auf die Adresssammelleitung 81 der Fig. 3 gegeben, und gemäss Darstellung in Fig. 4 werden die Steuerungen in der Speichersteuerung 27 über verschiedene Kombinationen von Bits vom SAR adressiert. In der Darstellung definieren z. B. die Bits 2 bis 12 im SAR die reale Adresse einer 2K-Seite im Speicher, die Bits 13 bis 17 eine Seitenadresse im Cachespeicher, die Bits 18 bis 20 eine 8 Byte grosse Zeile innerhalb einer Cacheseite und die Bits 21 bis 23 ein Byte innerhalb einer Zeile. Diese Adressaufteilung ist im einzelnen im Zusammenhang mit der Beschreibung der in Fig. 5 gezeigten Speichersteuerung erklärt.

In Fig. 5 sind die verschiedenen Bestandteile der Speichersteuerung und die Beziehungen zum Cachespeicher und Hauptspeicher sowie der Speicherdatenfluss dargestellt. Das System enthält eine Prozessorverzeichnis-Suchtabelle (DLAT) 102 und eine Kanalverzeichnis-Suchtabelle 103, wobei in der Prozessor-Suchtabelle jede Eintragung aus einem virtuellen und einem realen Adressfeld zusammen mit einem Abruf- und Statusbit besteht. Die Kanaltabelle enthält die Eintragungen für die virtuelle und reale Adressierung des Kanales. Ausserdem enthält das System einen Schlüsselstapel 105 mit mehreren Eintragungen, die jeweils eine gegebene Seite im Hauptspeicher 107 darstellen. Das Cachespeicherverzeichnis 109 enthält mehrere Eintragungen mit jeweils mehreren Verbindungsmöglichkeiten. Das Cachespeicherverzeichnis kann beispielsweise ein 4-Weg-Assoziativverzeichnis sein und daher enthält der Cachespeicher 111 vier Datenbereiche. Jeder Bereich des Cachespeichers 111 enthält mehrere Cachespeicherseiten, und der Cachespeicher wird über das Speicheradressregister adressiert. Das System enthält weiter eine Schlüsselprüfeinrichtung 113, ein Eingabe/Ausgabedatenregister 115 und einen Überlaufpuffer 117. Weiterhin sind zwei reale Adressregister 119 und 121 vorhanden, die nachfolgend mit RA1 und RA2 bezeichnet werden. Die Steuerung enthält ausserdem einen Vergleicher 123 und einen Fehlerkorrekturbitgenerator 125. Eine Hauptspeichersteuerung 127 und Speichersteuerregister 129 sorgen für die Anschaltung an den Hauptspeicher.

Zur Illustration wird angenommen, dass der Hauptspeicher eine Speicherkapazität von zwei Megabyte hat, der Cachespeicher 111 eine Kapazität von 8 Byte × 1K in vier Datenbereichen, wobei jeder Bereich 32 Cachespeicherseiten oder 256 Zeilen enthält. Für ein solches System enthält das Verzeichnis 109 insgesamt 128 Eintragungen mit 4-Weg-Assoziation, und der Schlüsselstapel ist eine 1K grosse Komponente, in der jede Eintragung eine 2K grosse Seite im Hauptspeicher repräsentiert. Das Eingabe-/Ausgabedatenregister 115 wird als 8 Byte grosses Datenübertragungsregister beschrieben, das sowohl die Prozessordaten beim Schreiben in den Speicher empfängt als auch beim Lesen aus dem Speicher die Daten an den Prozessor sendet. Das Eingabe-/Ausgabedatenregister 115 verschiebt ausserdem Daten zwischen den einzelnen Baugruppen in der Speichersteuerung.

Der Fehlerkorrekturbitgenerator 125 liefert die Information über richtige Parität auf der Daten-, bahn zwischen Hauptspeicher und Cachespeicher. Das Verzeichnis 109 und die Verzeichnistabellen 102, 103 empfangen die Adressierung über das Speicheradressregister, das ein 24 Bit grosses Register ist und über die Bitgruppierung zum Adressieren der Komponenten des Speichersteuerabschnittes benutzt wird. Seine Adressen können virtuell oder real sein. Die Register RA1 und RA2, Bezugszahl 119 und 121, empfangen Adressen von der Prozessorsuchtabelle 102 bzw. dem Verzeichnis 109 und adressieren in Verbindung mit dem SAR den Hauptspeicher 107 über die Speichersteuerregister 129.

Das Cachespeicherverzeichnis 109 wird von den Speicheradressregisterbits 13 bis 17 adressiert und spezifiziert eine 64 Byte grosse Cachespeicherseite. Jede Eintragung enthält eine 11 Bit grosse reale Adresse und drei Statusbits, von denen eines einen gültigen oder ungültigen Status, eines eine Modifikation des Status und eines den schlechten Zustand einer Cacheeintragung bezeichnet. Bei der 4-Weg-Assoziation stehen zu vier verschiedenen 2K-Seiten gehörende 4 Cachespeicherseiten gleichzeitig im Cachespeicher 112. Die Quelle der realen Adresse sind die realen Adressfelder von der Prozessor-Suchtabelle 102 oder über das RA1-Register 119 das Speicheradressregister. Das Cachespeicherverzeichnis zeigt an, wenn die gewünschte Seite im Cachespeicher steht. Wenn die reale Adresse im Verzeichnis gefunden wird und die Eintragung gültig ist, dann stehen die Daten im Cachespeicher. Diese Situation wird als Cachespeichertreffer oder auch einfach als Treffer bezeichnet. Wenn die reale Adresse nicht im Verzeichnis steht oder ihre Eintragung nicht gültig ist, dann stehen die Daten nicht im Cachespeicher, und dann liegt ein Cachespeicherfehler oder einfach ein Fehler vor. Bei einem Fehler muss der Hauptspeicher adressiert werden, um die gewünschten Daten von dort in den Cachespeicher zu bringen.

Der Cachespeicher 111 ist ein 8K Byte grosser Speicher, der zur Definition der 4-Weg-Assoziativität mit dem Verzeichnis 100 in vier Abschnitte unterteilt ist. Jeder Abschnitt des Cachespeichers enthält 32 Eintragungen von je 64 Bytes. Der Cachespeicher empfängt Daten vom Eingabe-/Ausgabedatenregister 115 und von der IPU-Datensammelleitung 135. Der Ausgang vom Cachespeicher geht zum Eingabe-/Ausgabedatenregister 115. Alle vier Datenbereiche des Cachespeichers werden gleichzeitig vom Speicheradressregister adressiert, wobei die SAR-Adressbits 13 bis 17 die Seitenkomponente und die SAR-Adressbits 18 bis 20 die 8 Bytes grosse Zeilenkomponente adressieren. Eine endgültige Auswahl erfolgt durch die Assoziativitätsklasse vom Verzeichnis 109, in dem der Treffer auftrat.

Im Betrieb werden 64 Byte-Seiten in den Cachespeicher 111 vom Hauptspeicher 107 nur bei den Befehlen geladen, in denen ein Verzeichnisfehler bei den Daten auftreten kann, die über das Eingabe-/Ausgabedatenregister 115 übertragen werden.

Ein Überlaufpuffer 117 speichert jeweils eine Cacheseite zum Puffern der aus dem Cachespeicher kommenden Seite bei einer Ausgabeoperation, und er speichert Syndrombits, die während eines Abrufs vom Hauptspeicher 107 erzeugt wurden. Mit den Sydrombits werden Daten gekennzeichnet, die vom Fehlerkorrekturbitgenerator 175 beim Auslesen aus dem Speicher korrigiert wurden. In einem nichtdargestellten Lesepuffer kann man Doppelwörter speichern, die bei einer Schreiboperation aus dem Cachespeicher ausgelesen wurden, bevor eine Modifikation des Cachespeichers stattfindet.

Das 8 Byte grosse Eingabe-/Ausgabedatenregister 115 dient zur Bewegung von Daten von und zum Prozessor/Kanal und dem Speicher. Ausserdem bewegt das Datenregister Daten zwischen den einzelnen Komponenten in der Speichersteuerung gemäss Darstellung in Fig. 5. Die Ausgabe des Datenregisters kann zum Cachespeichereingang, zur Prozessordatensammelleitung, zum Überlaufpuffer (oder Lesepuffer) und zum Fehlerkorrekturbitgenerator gehen. Das Datenregister kann vom Cachespeicherausgang, von der Prozessordatensammelleitung, vom Fehlerkorrekturbitgenerator, von der Schlüsseleinrichtung, vom Lesepuffer und vom Überlaufpuffer geladen werden.

Der reale Adressassembler besteht aus den Registern RA1 mit der Nummer 119 und RA2 mit der Nummer 121. Das Register RA1 wird vom Speicheradressregister oder von den realen Adressfeldern der Verzeichnissuchtabellen 102 und 103 geladen. Das Register RA2 wird von der realen Adresseintragung geladen, die beim Vergleich im Verzeichnis 109 Übereinstimmung ergibt. Bei einem DLAT-Treffer und einem Verzeichnisfehler wird die reale Adresse vom Register RA1 in den Hauptspeicher 107 geleitet. Gleichzeitig werden auch die SAR-Bits 13 bis 17 in den Hauptspeicher geleitet, wobei die Adressbits vom Register RA1 eine gewählte 2K-Seite und die Bits 13 bis 17 die gewählten 64 Bytes (Cachespeicherseite) adressieren. Die Ausgabe der realen Adresse kann auch auf den Eingang des Verzeichnisses zum Laden der realen Adresse in den Schlüsselstapel zum Auslesen oder Speichern der Schlüssel oder in den Lese-/Überlaufpuffer zur Speicherung gelesener Adressen geleitet werden.

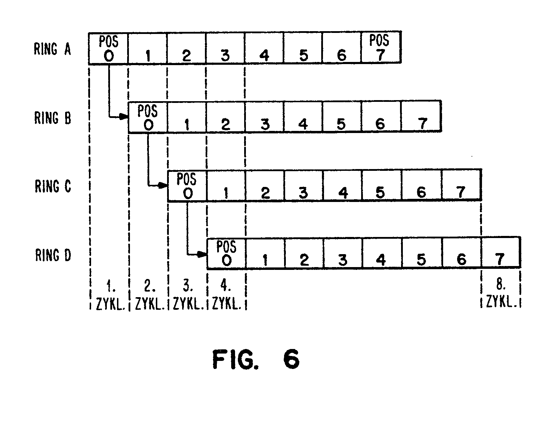

Anhand der in Fig. 6 gezeigten Steuerung wird die Datenübertragung innerhalb des Systems gezeigt. Die Grundsteuerung besteht aus einer Reihe von Ringzählern. Die Anzahl der verwendeten Ringzähler ist abhängig von der jeweiligen Anwendung. 64 Byte grosse Cachespeicherseiten werden mit Drei- oder Vier-Ring-Zählern übertragen. Nach Darstellung in Fig. 6 enthält ein Vier-Ring-Zähler die Ringe A, B, C und D. Die Datensammelleitung ist 8 Bytes gross, und daher muss eine Cachespeicherseite in 8 sequentiellen Datenübertragungen übertragen werden. Jedes der 8 übertragenen Bytes wird durch eine der 8 Ringpositionen bezeichnet, d.h., jede Ringposition bezeichnet ein Doppelwort aus 8 Bytes, wobei die Position 0 das erste Doppelwort und die Position 7 das letzte Doppelwort bezeichnen.

Jeder der Ringe in der Reihe der Ringzähler gibt an, wo ein gegebenes Wort in einem gegebenen Zyklus im Systemdatenfluss steht.

Wenn z.B. 64 Datenbytes vom Hauptspeicher in den Kanal der IPU zu übertragen sind, läuft folgende Reihenfolge ab: Für den ersten Zyklus gibt der Ringzähler A an, dass jedes der 8 Bytes umfassenden Doppelworte auf der Speichersammelleitung 63 der Fig. 3 erscheint. Ring B bezeichnet den Zyklus, in dem jedes der Doppelworte durch den Fehlerkorrekturbitgenerator 61 läuft, Ring C bezeichnet den Zyklus, in dem jedes der Doppelworte im Eingabe-/Ausgabedatenregister gespeichert und so in den Cachespeicher gelesen werden kann, und Ring D gibt an, dass die Daten auf der bidirektionalen Datensammelleitung 57 erscheinen und für den Prozessor oder den Kanal zur Verfügung stehen.

Wenn eine Abrufoperation vom Hauptspeicher 29 zum Prozessor 25 oder Kanal 37 angefordert ist, läuft diese in nachstehender Reihenfolge ab: Während des zweiten Zyklus ist die Position 0 des Ringes B (Fig. 6) aktiv, was bedeutet, dass das Doppelwort 0 jetzt durch den Fehlerkorrekturbitgenerator läuft, und die Position 1 des Ringes A ist eingeschaltet und zeigt an, dass die Hauptspeicher-Datensammelleitung 63 jetzt das Doppelwort 1 enthält. Während des dritten Zyklus läuft das Doppelwort 0 durch das Eingabe-/Ausgabedatenregister 55 der Fig. 3 entsprechend der Position 0 des Ringes C. Das Doppelwort 1 steht im Fehlerkorrekturbitgenerator 61, und das Doppelwort 2 erscheint auf der Hauptspeicher-Datensammelleitung 63. Während des vierten Zyklus befindet sich das Doppelwort 0 auf der bidirektionalen Datensammelleitung 57, das Doppelwort 1 läuft durch das Datenregister 55, das Doppelwort 2 passiert den Fehlerkorrekturbitgenerator 61, und das Doppelwort 3 steht auf der Hauptspeicher-Datensammelleitung 63. Dieser Prozess wird fortgesetzt, bis die gewünschte Datenmenge übertragen ist, z.B. durch eine Anzahl von Zyklen, die für die Übertragung einer vollen Seite mit 64 Bytes ausreichen.

Für Übertragungen zwischen dem Cachespeicher und dem Hauptspeicher werden nur drei Ringe gebraucht, da die Daten, wenn sie im Register 55 stehen, direkt für das Einlesen in den Cachespeicher zur Verfügung stehen. Der vierte Ringzähler wird für Übertragungen zwischen den IPU-Kanälen und dem Hauptspeicher gebraucht, weil da zur Übertragung der Daten auf die 8 Byte grosse bidirektionale Datensammelleitung 57 zwischen den IPU-Kanälen 25 und dem Datenregister 55 ein weiterer Zyklus erforderlich ist.

Bei Speicheroperationen werden die Daten in der entgegengesetzten Richtung übertragen und daher definieren die Ringe A, B, C und D Datenübertragungen in Rückwärtsrichtung. Das gilt sowohl für die Übertragung von Daten aus dem Kanal/Prozessor zum Hauptspeicher 29 als auch für die Übertragung vom Cachespeicher 51 über den Überlaufpuffer in den Hauptspeicher 29.

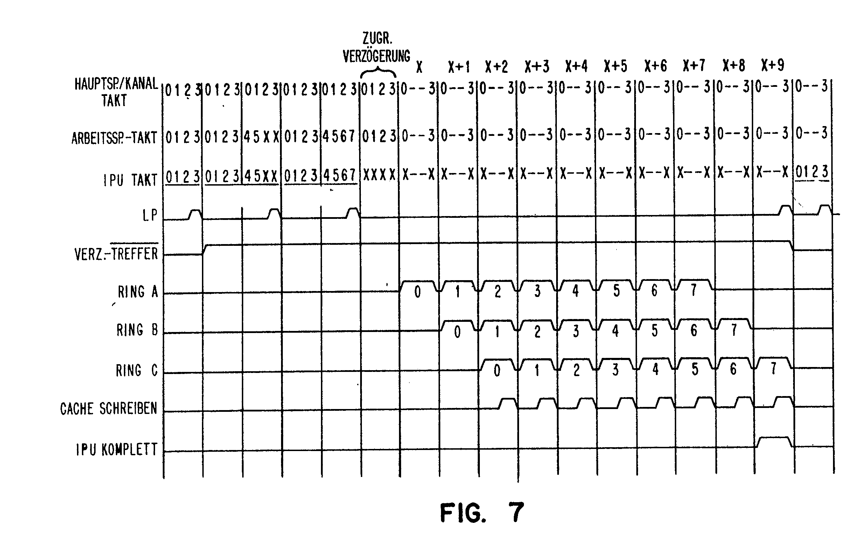

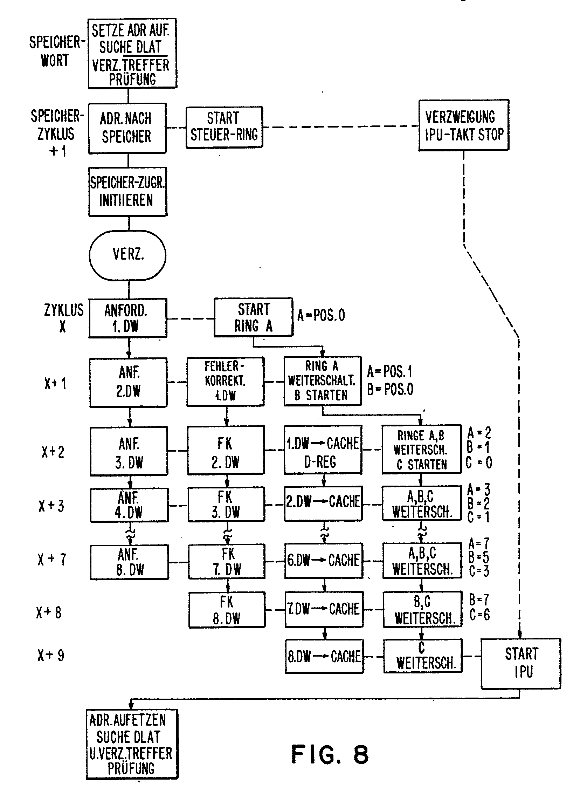

Zum besseren Verständnis der Arbeitsweise des Systems ist die Reihenfolge der bei einer Datenübertragung vom Hauptspeicher zum Cachespeicher ablaufenden Vorgänge in Fig. 8 gezeigt, das zugehörige Zeitfolgediagramm ist in Fig. 7 dargestellt. Die Ring-Zähler haben die in Fig. 6 gezeigte Lage und die in Fig. 7 gezeigte Zeiteinstellung. In dem Ablaufdiagramm der Fig. 8 arbeiten die horizontal liegenden Kästen parallel und die vertikal liegenden sequentiell. Bevor eine Datenübertragung vom Hauptspeicher zum Cachespeicher eingeleitet wird, müssen die Taktgeber für Hauptspeicher und Kanal mit den Taktgebern vom Cachespeicher und IPU synchronisiert werden. Das ist in der Darstellung der Fig. 7 mit irgendeinem der bekannten Synchronisationsprozesse bereits geschehen. Im ersten in Fig. 8 gezeigten Schritt gibt das Speicherwort die Adresse aus und sucht die Verzeichnistabelle ab. Wenn eine Suche des Verzeichnisses 109 in Fig. 5 einen Fehler anzeigt, dann folgt auf den ersten Lesezyklus eine Verzweigungsfolge innerhalb der nächsten beiden Speicher-/Kanalzyklen und eine anschliessende Rückkehr auf die folgenden beiden Zyklen. Bei der Auslösung der Verzweigung wird ein Verzeichnisfehlimpuls erzeugt, so dass nach dem Rückkehrzyklus des IPU-Taktgebers der Prozessor effektiv zur Ruhe gesetzt wird, dargestellt durch die X's auf der Taktleitung für den IPU-Taktgeber in Fig. 7. Nachdem in einer Prüfung festgestellt wurde, dass tatsächlich ein Fehler aufgetreten ist, werden Befehl und Adressen an den Hauptspeicher 107 gegeben, und dieser beginnt mit der Steuerringfolge.

Wenn der Steuerringzähler gestartet wird, werden der Verzweigungs- und der Rückwärtszyklusbefehl ebenfalls eingeleitet und der IPU-Taktgeber gestoppt. Nachdem Befehl und Adresse an den Speicher gegeben sind, wird der Speicherzugriff eingeleitet, und es tritt eine unbestimmte Zugriffsverzögerung ein, während die Datenadresse im Speicher lokalisiert wird. Während dieser Vorgang in Fig. 7 als ein Zugriffsverzögerungszyklus dargestellt ist, kann er in der Wirklichkeit natürlich mehr als einen Zyklus erfordern. Wenn die Daten einmal im Speicher lokalisiert sind (auf dem Zyklus X), wird das erste Doppelwort angefordert, und der Ringzähler A beginnt mit dem ersten Doppelwort in Position 0 zu zählen. Beim nächsten Zyklus, X + 1, wird das zweite Doppelwort angefordert, das erste Doppelwort ist in den Fehlerkorrekturbitgenerator 125 gelaufen (Ringzähler B), und die Ringzähler A und B sind so vorgeschaltet, dass der Ringzähler A jetzt auf Position 1 steht und der Ringzähler B auf Position 0.

Beim dritten Übertragungszyklus, X + 2, wird das dritte Doppelwort angefordert, das zweite Doppelwort steht im Fehlerkorrekturbitgenerator 125 und das erste Doppelwort im Eingabe-/Ausgaberegister 115. Am Ende des Zyklus X + 2 wird der Cachespeicher-Schreibimpuls erzeugt und das erste Doppelwort aus dem Eingabe-/Ausgaberegister 115 in den Cachespeicher 111 gelesen. Beim dritten Zyklus, X + 3, wird das vierte Doppelwort vom Speicher angefordert, das dritte Doppelwort steht im Fehlerkorrekturbitgenerator 125, das zweite Doppelwort steht im Eingabe-/Ausgaberegister 115, und das erste Doppelwort steht im Cachespeicher 111. Zu diesem Zeitpunkt ist der Fliessband-Effekt der Datenübertragung vollständig und läuft weiter, bis alle Daten übertragen sind. Zum Ende des Zyklus X + 3 wird auch das zweite Doppelwort vom Eingabe-/Ausgaberegister 115 in den Cachespeicher 111 gelesen. Diese Vorgangsfolge läuft weiter bis zum Zyklus X + 9, wenn das letzte Doppelwort im Eingabe-/Ausgaberegister 115 gespeichert und von dort bei einem Cacheschreibimpuls in den Cachespeicher gelesen wurde. Am Ende des Zyklus X + 9 wird der Verzeichnisfehlimpuls fallengelassen. Zu dieser Zeit wird der Fertigimpuls für die IPU erzeugt und dadurch der IPU-Taktgeber eingeschaltet und ein Leseimpuls ausgegeben. An diesem Übergangspunkt wird die Adresse für die angeforderten Daten vom Prozessor an den Cachespeicher gegeben, die Verzeichnissuchtabelle abgesucht und ein Verzeichnistreffer erzielt. Nachdem die Genauigkeit des Verzeichnistreffers geprüft wurde, werden die Daten in nachfolgenden Zyklen vom Cachespeicher an den Prozessor übertragen.

**Patentansprüche**

1. Hierarchisches Speichersystem aus einem ersten kleinen, sehr schnellen Speicher (51 in Fig. 3) und einem grossen, langsamen Hauptspeicher (29) und einem Datenregister (55), das über eine erste bidirektionale Leitung (57) mit der Informationsverarbeitungseinheit (25) über eine zweite bidirektionale Sammelleitung (59) mit einem Fehlerkorrekturgenerator (61) und dieser über eine dritte bidirektionale Datensammelleitung (63) mit dem Hauptspeicher (29) verbunden ist, wobei die Datensammelleitungen und das Datenregister (55) eine Datenflussbreite von einem Doppelwort (8 Byte) aufweisen und jeweils eine aus n Doppelwörtern umfassende Seite zwischen dem Hauptspeicher und dem Datenregister übertragen wird, dadurch gekennzeichnet, dass ein erster Ringzähler (A) der dritten bidirektionalen Datensammelleitung (63), ein zweiter Ringzähler (B) dem Fehlerkorrekturbit-Generator (61) und ein dritter Ringzähler (C) dem Datenregister (55) und dem schnellen kleinen Speicher (51) sowie ein vierter Ringzähler (D) der ersten bidirektionalen Sammelleitung (57) zugeordnet ist und dass die Ringzähler n Zählstufen aufweisen, die jeweils ein Doppelwort an einer zugeordneten Position (61, 63, 55, 57) kennzeichnen.

2. Mehrstufige Speicherhierarchie nach Anspruch 1, dadurch gekennzeichnet, dass bei einer Abrufoperation vom Hauptspeicher (29) zum Prozessor (25) während des zweiten Zyklus die Position 0 des zweiten Ringes (B) aktiv ist, wodurch angezeigt wird, dass ein Doppelwort 0 jetzt durch den Fehlerkorrekturbitgenerator (61) läuft, dass die Position 1 des ersten Ringes (A) eingeschaltet ist, wodurch angezeigt wird, dass die Hauptspeicherdatensammelleitung das Doppelwort 1 enthält, dass während des dritten Zyklus das Doppelwort 0 durch das Eingabe-/Ausgabedatenregister (55) entsprechend der Position 0 des dritten Ringes (C) läuft, dass während des Durchlaufs des Doppelwortes 1 durch den Fehlerkorrekturbit-Generator (61) das Doppelwort 2 auf der Hauptspeicherdatensammelleitung (63) erscheint, dass während des vierten Zyklus das Doppelwort 0 sich auf der Datensammelleitung (57), das Doppelwort 1 durch das Eingabe-/Ausgabedatenregister (55) und das Doppelwort 2 durch den Fehlerkorrekturbit-Generator (61) laufen und das Doppelwort 3 auf der Hauptspeicherdatensammelleitung (63) steht und dass dieser Prozess bis zum Ende der Übertragung einer vollen Seite fortgesetzt wird.

3. Speichersystem nach den Ansprüchen 1 und 2, dadurch gekennzeichnet, dass eine Prozessorverzeichnis-Suchtabelle (DLAT, 102) und eine Kanalverzeichnis-Suchtabelle (103) Eintragungen für virtuelle und reale Adressierungen des zur Informationsverarbeitungseinheit gehörenden Kanals enthalten, dass ausserdem ein Register (105) aus einem Schlüsselstapel mit mehreren Eintragungen vorgesehen ist, die jeweils eine gegebene Seite im Hauptspeicher (107) darstellen.

4. Speichersystem nach Anspruch 3, dadurch gekennzeichnet, dass das Cachespeicherverzeichnis ein 4-Weg-Assoziativverzeichnis ist und dass jeder Bereich des Cachespeichers (111) mehrere Cachespeicherseiten enthält, dass ausserdem eine Schlüsselprüfeinrichtung (113) mit dem Eingabe-/Ausgabedatenregister (115) und dem Überlaufpuffer (117) verbunden ist, dass zwei reale Adressregister (119 und 121) mit der Speichersteuerung (129) des Hauptspeichers (107) verbunden sind und dass die Steuerung aus einer Anzahl von Ring-Zählern besteht.

**Claims**

1. Storage hierarchy consisting of a first small high speed storage (51 in Fig. 3) and a big low speed main memory (29) and a data register (55) connected via a first bidirectional bus (57) to the data processing unit (25) via a second bidirectional bus (59) to an error correction generator (61) which is connected via a third bidirectional bus (63) to the main memory (29), the busses and the data register (55) having a data flow width of one double word (8 bytes), and one page respectively comprising n double words being transferred between the main memory and the data register, characterized in that a first ring counter (A) is associated to the third bidirectional bus (63), a second ring counter (B) to the error correction bit generator (61), and a third ring counter (C) to the data register (55) and the high speed small storage (51), and that a fourth ring counter (D) is associated to the first bidirectional bus (57), and that the ring counters have n count stages each characterizing a double word in an associated position (61, 63, 55, 57).

2. Multi-stage storage hierarchy as claimed in claim 1, characterized in that in a call-up operation from the main memory (29) to the processor (25) during the second cycle the position 0 of the second ring (B) is active, which indicates that a double word 0 now passes through the error correction bit generator (61), that the position 1 of the first ring (A) is switched on, which indicates that the main memory bus contains the double word 1, that during the third cycle the double word 0 passes through the input/output data register (55) in accordance with the position 0 of the third ring (C), that during the passing of the double word 1 through the error correction bit generator (61) the double word 2 appears on the main memory bus (63), that during the fourth cycle the double word 0 is on the bus (57), the double word 1 passes through the input/output data register (55), and the double word 2 through the error correction bit generator (61), and that the double word 3 is on the main memory bus (63), and that this process is continued until a full page has been transferred.

3. Storage system as claimed in any one of claims 1 and 2, characterized in that a processor directory data look-aside table (DLAT, 102) and a channel directory look-aside table (103) comprise entries for virtual and real addressing of the channel belonging to the data processing unit, that furthermore a register (105) consisting of a key stack with several entries is provided which each represent a given page in the main memory (107).

4. Storage system as claimed in claim 3, characterized in that the cache directory is a 4-way associated directory, and that each position of the cache (111) contains several cache pages, that furthermore a key check device (113) is connected to the input/output data register (115) and to the swap buffer (117), that two real address registers (119 and 121) are connected to the storage control (129) of the main memory (107), and that the control consists of a number of ring counters.

## Revendications

1. Système de mémoire hiérarchisé comprenant une première mémoire, petite et très rapide (51 sur la fig. 3) et une mémoire principale, grande et lente (29) et un registre de données (55), relié au moyen d'un premier bus bidirectionnel (57) à l'unité de traitement des informations (25), au moyen d'un second bus bidirectionnel (59) à un générateur de correction d'erreurs (61), celui-ci étant relié au moyen d'un troisième bus bidirectionnel (63) à la mémoire principale; les bus et le registre de données (55) présentant une largeur d'écoulement de données de deux mots (8 bytes) et des pages composées de n doubles mots étant transferées entre la mémoire principale et le registre de données; le système étant caractérisé en ce qu'un premier compteur en anneau (A) est associé au troisième bus (63), un second compteur en anneau (B) au générateur de bits de correction d'erreurs (61), un troisième compteur en anneau (C) au registre de données (55) et à la petite mémoire rapide (51) et un quatrième compteur en anneau (D) au premier bus bidirectionnel (57), et en ce que les compteurs en anneau présentent n niveaux de comptage qui repèrent individuellement un double mot dans la position qui lui est affectée (61, 63, 55, 57).

2. Système de mémoire selon la revendication 1, caractérisé en ce que lors d'une opération d'appel de données depuis la mémoire principale (29) vers le processeur (25) la position 0 du second compteur en anneau (B) est active pendant le second cycle, ce qui indique qu'un double mot 0 traverse à cet instant le générateur de bits de correction d'erreurs (61), en ce que la position 1 du premier compteur en anneau (A) est activée, ce qui indique que le bit de données de la mémoire principale contient le double mot 1, en ce que le double mot 0 franchit, au cours du troisième cycle, le registre d'entrée et de sortie des données (55) en fonction de la position 0 du troisième compteur en anneau (C), en ce que pendant le passage du double mot 1 à travers le générateur de bits de correction d'erreurs (61) le double mot 2 apparaît sur le bus de données de la mémoire principale (63), en ce que pendant le quatrième cycle le double mot 0 se trouve sur le bus (57), le double mot 1 franchit le registre d'entrée et de sortie des données (55) et le double mot 2 le générateur de bits de corrections d'erreurs (61) cependant que le double mot 3 se trouve sur le bus de la mémoire principale (63), et en ce que ce processus se répète jusqu'à la fin du transfert d'une page complète.

3. Système de mémoire selon la revendication 1 ou 2 caractérisé en ce qu'une table de données du répertoire du processeur (DLAT, 102) et une table de données du répertoire de canal (103) contient des enregistrements permettant un adressage virtuel ou réel du canal correspondant à l'unité de traitement des données, en ce qu'il est en outre prévu un registre (105) à structure de pile à plusieurs enregistrements dont chacun correspond à une page donnée dans la mémoire principale (107).

4. Système de mémoire selon la revendication 3 caractérisé en ce que le répertoire de l'antémémoire est une mémoire associative à quatre entrées et en ce que chaque emplacement de l'antémémoire (111) contient plusieurs pages, en ce qu'en outre un dispositif de vérification de code (113) est relié au registre d'entrée et de sortie des données (115) et à une mémoire-tampon de débordement (117), en ce que deux registres d'adressage réel (119 et 121) sont reliés au moniteur mémoire (129) de la mémoire principale (107), et enfin en ce que ce moniteur est constitué d'une série de compteurs en anneau.

FIG. 2

FIG. 1

CACHE-SPEICHER-SYSTEM     SCHLÜSSELREGISTER

**FIG. 3**

**FIG. 4**

FIG. 5

RING A | POS 0 | 1 | 2 | 3 | 4 | 5 | 6 | POS 7

RING B | POS 0 | 1 | 2 | 3 | 4 | 5 | 6 | 7

RING C | POS 0 | 1 | 2 | 3 | 4 | 5 | 6 | 7

RING D | POS 0 | 1 | 2 | 3 | 4 | 5 | 6 | 7

1. ZYKL. | 2. ZYKL. | 3. ZYKL. | 4. ZYKL. | 8. ZYKL.

# FIG. 6

ZUGR. VERZÖGERUNG

X  X+1  X+2  X+3  X+4  X+5  X+6  X+7  X+8  X+9

HAUPTSP./KANAL TAKT | 0 1 2 3|0 1 2 3|0 1 2 3|0 1 2 3|0 1 2 3|0 1 2 3|0 - - 3|0 - - 3|0 - - 3|0 - - 3|0 - - 3|0 - - 3|0 - - 3|0 - - 3|0 - - 3|0 - 3|

ARBEITSSP.-TAKT | 0 1 2 3|0 1 2 3|4 5 X X|0 1 2 3|4 5 6 7|0 1 2 3|0 - - 3|0 - - 3|0 - - 3|0 - - 3|0 - - 3|0 - - 3|0 - - 3|0 - - 3|0 - - 3|0 - - 3|

IPU TAKT | 0 1 2 3|0 1 2 3|4 5 X X|0 1 2 3|4 5 6 7|X X X X|X - - X|X - - X|X - - X|X - - X|X - - X|X - - X|X - - X|X - - X|X - - X|0 1 2 3|

LP

VERZ.-TREFFER

RING A    0  1  2  3  4  5  6  7

RING B    0  1  2  3  4  5  6  7

RING C    0  1  2  3  4  5  6  7

CACHE SCHREIBEN

IPU KOMPLETT

FIG. 7

0 010 625

FIG. 8

19